# EUROPÄISCHE PATENTSCHRIFT

(11) **EP 1 937 394 B1**
(45) Veröffentlichungstag und Bekanntmachung des Hinweises auf die Patenterteilung: **10.11.2010**
(21) Anmeldenummer: 06792253.4
(22) Anmeldetag: 26.09.2006
(51) Int. Cl.: B01D 67/00, B01D 69/12, A41D 31/00, F41H 3/02, C23C 14/02, C23C 14/20

(54) **VERFAHREN ZUM HERSTELLEN EINER REFLEKTIERENDEN MEMBRAN**
METHOD FOR THE PRODUCTION OF A REFLECTIVE MEMBRANE
PROCEDE POUR PRODUIRE UNE MEMBRANE REFLECHISSANTE

(30) Priorität: 30.09.2005 EP 05021475
(43) Veröffentlichungstag der Anmeldung: 02.07.2008
(73) Patentinhaber: Sympatex Technologies GmbH, 85774 Unterföhring (DE)
(72) Erfinder: WITTMANN, Gabriele, Beate, 81927 München (DE); VAN DE VEN, Henricus, Joannes, Maria, NL-6825 CT Arnhem (NL)
(74) Vertreter: Schröder, Richard
(86) Internationale Anmeldenummer: PCT/EP2006/009306
(87) Internationale Veröffentlichungsnummer: WO 2007/039180

(56) Entgegenhaltungen:
- EP-A- 0 361 865
- EP-A- 1 184 482
- WO-A-2004/020931
- DE-A1- 4 322 512
- GB-A- 2 294 426

## Beschreibung

Die Erfindung betrifft ein Verfahren zum Herstellen einer reflektierenden Membran .

Reflektierende Membranen sind bereits bekannt. Beispielsweise ist eine derartige Membran aus WO 98/12494 sowie der WO 2004 /020931 bekannt geworden. Es handelt sich dort um mikroporöse Membranen, bei welchen eine Metallbeschichtung vorhanden ist, die die Oberfläche der Membranen und zumindest teilweise die Wände der Poren abdeckt. Um die Metallschicht vor einer Oxidierung zu schützen wird vorgeschlagen, die gesamte Membran inklusive der Wände der Poren mit einer Deckschicht derart zu versehen, dass die Poren offen bleiben. Hierbei handelt es sich um ein sehr aufwendiges Verfahren, da sicher gestellt sein muss, dass die Deckschicht unterbrechungsfrei die Oberfläche der Membran und die Wände der Poren der Membran abdecken. Sobald Unterbrechungen der Deckschicht wahrgenommen werden, ergibt sich ein ungenügender Schutz für die Metallschicht. Außerdem kann sich an diesen Stellen die Deckschicht ablösen und die Poren der Membran verstopfen, so dass eine Reduzierung der Wasserdampfdurchlässigkeit erfolgen kann. Weiterhin wäre es zum Schutze der Poren wünschenswert, wenn die Deckschicht sich zumindest auf der Oberfläche, die die Metallbeschichtung aufweist, kontinuierlich ausgebildet werden könnte. Wie weiter unten beschrieben, ist der Schutz einer derartigen Deckschicht dauerhaft nicht ausreichend.

Auch aus EP 1 184 482 A1 ist eine derartige Membran bekannt. Hier handelt es sich um eine porenfreie Membran, bei welcher Wasserdampfmoleküle sich in der Membrane lösen und auf physikalisch-chemischem Weg durch die Membrane nach außen transportiert werden. Auch hier wird eine Metallschicht und danach eine Deckschicht aufgebracht. Diese Membranen sind sehr dünn, so dass es nur unter sehr viel Aufwand möglich ist, die Metallbeschichtung und auch die Deckschicht auf die Membran aufzubringen. Da die Membran sowieso zu ihrem vorgesehenen Gebrauch auf ein textiles Flächengebilde laminiert wird, ist es mittlerweile üblich, das aus textilem Flächengebilde und der Membran bestehende Laminat zu beschichten. Allerdings zeigt es sich, dass bereits nach der ersten Wäsche des Laminats bei 40 °C die wirksame Metallfläche auf der Membran auf unter 80 % reduziert ist. Dies ergibt sich offensichtlich dadurch, dass die Deckschicht durch das Waschen aufgebrochen wird, wodurch die Waschmittellauge an den aufgebrochenen Stellten der Deckschicht bis zur Metallschicht vordringen kann, wodurch die Metallschicht in Berührungsbereich mit der Waschlauge oxidiert und teilweise sogar abgewaschen wird.

Es ist Aufgabe der vorliegenden Erfindung ein Verfahren zur Herstellung einer reflektierenden, wasserdichten, wasserdampfdurchlässigen Membran zur Verfügung zu stellen, deren Deckschicht stabiler und beständiger ausgebildet ist.

Die erfindungsgemäß gestellte Aufgabe wird gelöst durch ein Verfahren zum
Herstellen einer reflektierenden, wasserdichten, wasserdampfdurchlässigen Membran, welches folgende Schritte umfasst,
Bereitstellen einer wasserdichten, wasserdampfdurchlässigen Membran,
Bereitstellen einer Trägerfolie,
Aufbringen der Membran auf die Trägerfolie
Anbringen einer metallischen Oberfläche auf die freie Oberfläche der Membran über Vakuum - Dampf - verfahren
Aufbringen einer kontinuierlichen, wasserdichten, wasserdampfdurchlässigen Deckschicht Entfernen der Trägerfolie.

Überraschender Weise hat es sich herausgestellt, dass durch die Verwendung einer Trägerfolie anstatt eines textilen Flächengebildes die aufgebrachte Deckschicht eine deutlich stabilere Verbindung mit der metallischen Oberfläche eingeht, so dass die so hergestellte Membran öfter gewaschen werden kann.

Das Aufbringen der Membran auf die Trägerfolie kann im einfachsten Fall ein einfaches Auflegen sein, wobei darauf zu achten ist, dass sich zwischen Membran und Trägerfolie keine Luftblasen bilden. Die durch die statische Aufladung der Membran und/oder Trägerfolie erzeugte Haftung reicht in der Regel aus, um das erfindungsgemäße Verfahren durchführen zu können.

Bei dem erfindungsgemäßen Verfahren hat es sich als besonders günstig herausgestellt, wenn das Aufbringen der Membran auf die Trägerfolie durch gemeinsames Extrudieren eines Membranmaterials und eines Materials für die Trägerfolie über eine Bikomponenten -Düse erfolgt. Hierbei sollte die Materialauswahl derart getroffen werden, dass das Material der Membran und das Material der Trägerfolie beim Zusammentreffen auch in schmelzflüssigem Zustand keine chemische und höchstens geringe physikalische Bindung eingehen, damit sicher gestellt ist, dass die Trägerfolie nach Durchlaufen des erfindungsgemäßen Verfahrens wieder von der Membran entfernt werden kann.

Das erfindungsgemäße Verfahren zeichnet sich insbesondere dadurch aus, dass als Membranmaterial Polyetherester, Polyetheramid oder Polyetherurethan und/oder als Material für die Trägerfolie Polyolefine, Polypropylene, Polyvinylchloride, Polyethylene, PTFE, Polyester oder Polyamide eingesetzt werden.

Für das Material für die Deckschicht hat es sich als besonders günstig herausgestellt, wenn ein Polyurethan eingesetzt wird welches wasserdampfdurchlässig ist. Hierbei hat es sich als vorteilhaft herausgestellt, wenn das Polyurethan nach dem Auftragen auf die Metallbeschichtung innerhalb von 0,1 bis 5 sec auf eine Temperatur von 120 bis 200 °C gebracht und bei dieser Temperatur bis zum vollständigen Ausreagieren des Polyurethan gehalten wird.

Die erfindungsgemäß hergestellte Membran besitzt eine reflektierende, wasserdichte, wasserdampfdurchlässige Membran mit einer Metallbeschichtung, welche mit einer kontinuierlichen Deckschicht versehen ist, welche sich dadurch auszeichnet, dass bei der Membran nach 3 Wäschen, bevorzugt nach 5 Wäschen bei 40 °C gemäß DIN EN ISO 6330:2000 mindestens noch 80 % der Oberfläche der aktiven Metallbeschichtung erhalten ist. Eine solche Qualität war bisher, wie oben beschrieben, bei einer kontinuierlichen Ausbildung der Deckschicht nicht erreichbar.

Bevorzugt besteht die Deckschicht der efindungsgemäß hergestellten Membran aus einem Polyurethan.

Die erfindungsgemäß hergestellte Membran kann praktisch aus allen Materialien, die zur Herstellung wasserdichter, wasserdampfdurchlässiger Membranen geeignet sind, bestehen. Bevorzugt bestehen die Membranen jedoch aus Polyetherester, Polyetheramid oder aus Polyetherurethan.

Als Material für die reflektierende Schicht der Membran hat sich insbesondere Aluminium, Kupfer, oder Silber bestens bewährt.

Die Erfindung wird anhand der nachstehenden Beispiele näher erläutert.

### Beispiel 1 (Vergleich)

Eine 15 µm dicke porenfreie Membran aus Copolyetherester wurde zum einen auf ein Polyestervlies mit einem Flächengewicht von 56 g/m² (Laminat A) und zum anderen auf ein Polyestergewebe mit einem Flächengewicht von 115 g/m² (Laminat B) laminiert. Die entstandenen Laminate wurden jeweils nach dem in der EP 1 184 482 beschriebenen Verfahren mit einer 60 nm dicken Aluminiumschicht und anschließend mit einer 1,25 µm dicken Polyurethan-Deckschicht ausgestattet. Diese Laminate wurden nach DIN EN ISO 6330:2000 unter Verwendung einer Frontlader-Maschine Typ A mit horizontal gelagerter Trommel bei 41 °C mit einem phosphatfreien ECE- Bezugswaschmittel A gewaschen, geschleudert und anschließend nach Verfahren B getrocknet. Bereits nach einer Wäsche waren bei Laminat A lediglich noch 59 % und bei Laminat B sogar nur 44 % der Fläche der Aluminiumschicht aktiv (die beiden Schichten unterscheiden sich dadurch, dass die nicht aktive Fläche eine mattere Oberfläche als die aktive Schicht aufweist). Nach 3 Wäschen waren bei Laminat A noch 47 % und bei Laminat B 32 % der Fläche der Aluminiumschicht aktiv.

### Beispiel 2 (erfindungsgemäß)

Aus Copolyetherester und Polypropylen wird eine zweischichtige Folie mit einer 15 µm dicken porenfreien Membran aus Copolyetherester einer 35 µm dicken Trägerfolie aus Polypropylen hergestellt. Danach wurde die Membranseite nach dem in der EP 1 184 482 beschriebenen Verfahren mit einer 60 nm dicken Aluminiumschicht und anschließend mit einer 1,25 µm dicken Polyurethan-Deckschicht ausgestattet. Anschließend wurde die Membran von der Trägerfolie abgezogen und zum einen auf ein Polyestervlies mit einem Flächengewicht von 56 g/m² (Laminat C) und zum anderen auf ein Polyestergewebe mit einem Flächengewicht von 115 g/m² (Laminat D) laminiert, wobei die nicht metallisierte Seite der Membran mit dem Polyestervlies beziehungsweise mit dem Polyestergewebe verbunden wurde. Diese Laminate wurden nach DIN EN ISO 6330:2000 unter Verwendung einer Frontlader-Maschine Typ A mit horizontal gelagerter Trommel bei 41 °C mit einem phosphatfreien ECE- Bezugswaschmittel A gewaschen, geschleudert und anschließend nach Verfahren B getrocknet. Nach einer Wäsche waren bei Laminat C noch 97 % und bei Laminat D noch 96 % der Fläche der Aluminiumschicht aktiv. Nach 3 Wäschen waren bei Laminat C noch 92 % und bei Laminat D noch 91 % und nach 5 Wäschen bei Laminat C 87 % und bei Laminat D 85 % der Fläche der Aluminiumschicht aktiv.

## Patentansprüche

1. Verfahren zum Herstellen einer reflektierenden, wasserdichten, wasserdampfdurchlässigen Membran, welches folgende Schritte umfasst :
Bereitstellen einer wasserdichten, wasserdampfdurchlässigen Membran,
Bereitstellen einer Trägerfolie,
Aufbringen der Membran auf die Trägerfolie
Anbringen einer metallischen Oberfläche auf die freie Oberfläche der Membran über Vakuum - Dampf -Verfahren
Aufbringen einer kontinuierlichen, wasserdichten,
wasserdampfdurchlässigen Deckschicht
Entfernen der Trägerfolie.

2. Verfahren nach Anspruch 1, **dadurch gekennzeichnet, dass** das Aufbringen der Membran auf die Trägerfolie durch gemeinsames Extrudieren eines Membranmaterials und eines Materials für die Trägerfolie über eine Bikomponenten - Düse erfolgt.

3. Verfahren nach Anspruch 1 oder 2,**dadurch gekennzeichnet, dass** als Membranmaterial Polyetherester, Polyetheramid oder Polyetherurethan eingesetzt wird.

4. Verfahren nach einem oder mehreren der Ansprüche 1 bis 3, **dadurch gekennzeichnet, dass** als Material für die Trägerfolie Polyolefine, Polypropylene, Polyvinylchloride, Polyethylene, PTFE, Polyester oder Polyamide eingesetzt werden.

5. Verfahren nach einem oder mehreren der Ansprüche 1 bis 4, **dadurch gekennzeichnet, dass** als Material für die Deckschicht ein Polyurethan eingesetzt wird, welches wasserdampfdurchlässig ist.

6. Verfahren nach Anspruch 5, **dadurch gekennzeichnet, dass** das Polyurethan nach dem Auftragen auf die Metallbeschichtung innerhalb von 0,1 bis 5 sec auf eine Temperatur von 120 bis 200 °C gebracht und bei dieser Temperatur bis zum vollständigen Ausreagieren des Polyurethans gehalten wird.

## Claims

1. Method for producing a reflective, waterproof, water-vapor permeable membrane, comprising the following steps:
Provision of a waterproof, water-vapor permeable membrane,
Provision of a carrier foil,
Application of the membrane onto the carrier foil,
Application of a metal surface to the membrane's free surface via a vacuum vapor process,
Application of a continuous, waterproof, water-vapor permeable cover layer,
Removal of the carrier foil.

2. Method according to Claim 1, **characterized in that** the application of the membrane onto the carrier foil occurs through combined extrusion of a membrane material and a material for the carrier foil via a bicomponent nozzle.

3. Method according to Claim 1 or 2, **characterized in that** polyether ester, polyetheramide or polyether urethane is used for the membrane material.

4. Method according to one or more of Claims 1 to 3, **characterized in that** polyolefins, polypropylenes, polyvinylchlorides, polyethylenes, PTFE, polyesters or polyamides are used for the material for the carrier foil.

5. Method according to one or more of Claims 1 to 4, **characterized in that** a polyurethane that is water-vapor permeable is used for the material for the cover layer.

6. Method according to Claim 5, **characterized in that** the polyurethane is brought to a temperature of 120 to 200°C within 0.1 to 5 sec following the application of the metal coating, and is maintained at this temperature until the polyurethane is fully cured.

## Revendications

1. Procédé de fabrication d'une membrane réfléchissante, étanche à l'eau et perméable à la vapeur d'eau, lequel procédé comporte les étapes suivantes :
- prendre une membrane étanche à l'eau et perméable à la vapeur d'eau ;
- prendre une feuille de support ;
- disposer la membrane sur la feuille de support ;
- former une surface métallique sur la surface libre de la membrane, par dépôt sous vide à partir d'une phase vapeur ;
- déposer là-dessus une couche de couverture continue, étanche à l'eau et perméable à la vapeur d'eau ;
- et enlever la feuille de support.

2. Procédé conforme à la revendication 1, **caractérisé en ce que** l'on dispose la membrane sur la feuille de support par co-extrusion d'un matériau de membrane et d'un matériau de feuille de support, réalisée au moyen d'une filière conçue pour deux composants.

3. Procédé conforme à la revendication 1 ou 2, **caractérisé en ce que** l'on utilise, en tant que matériau de membrane, un poly(éther ester), un poly(éther amide) ou un poly(éther uréthane).

4. Procédé conforme à l'une ou plusieurs des revendications 1 à 3, **caractérisé en ce que** l'on utilise, en tant que matériau de feuille de support, une polyoléfine, un polypropylène, un poly(chlorure de vinyle), un polyéthylène, un polytétrafluoroéthylène (PTFE), un polyester ou un polyamide.

5. Procédé conforme à l'une ou plusieurs des revendications 1 à 4, **caractérisé en ce que** l'on utilise, en tant que matériau de couche de couverture, un polyuréthane qui est perméable à la vapeur d'eau.

6. Procédé conforme à la revendication 5, **caractérisé en ce que**, après avoir déposé le polyuréthane sur la couche métallique, on le chauffe à une température de 120 à 200 °C en l'espace de 0,1 à 5 secondes, puis on le maintient à cette température jusqu'à ce qu'il ait complètement cessé de réagir.
